# EUROPEAN PATENT APPLICATION

(11) **EP 4 248 741 A1**
(43) Date of publication of application: **27.09.2023**
(21) Application number: 22462004.7
(22) Date of filing: 25.03.2022
(51) Int. Cl.: A01K 61/17

(54) **MOBILE FISH HATCHERY**

(71) Applicant: GS-Pipe Mérnöki, Kereskedelmi És Szolgáltató Kft., 2045 Törökbálint (HU)
(72) Inventor: Séra, Milán, H-1118 Budapest (HU); Urbányi, Béla, H-2049 Diósd (HU); Csorbai, Balázs, H-2193 Galgahévíz (HU)
(74) Representative: Danubia Patent & Law Office LLC

(57) **Abstract**

The mobile fish hatchery (1) comprises a tank (AT) holding of broodstock, a mechanical filter unit (Sz1) connected to the tank (AT) holding the broodstock, a equalisation tank (KT) connected to the tank (AT) of broodstock via a piping system (Cs), a circulating pump (Sz2) and a biological water filter unit (BSZ) inserted in the piping system (Cs) between the tank (AT) holding the broodstock and the equalisation tank (KT), a water supply line between the equalisation tank (KT) and the tank (AT) of broodstock, tanks (OZ) for growing larvae with a significantly smaller volume than the tank (AT) of broodstock, arranged between the equalisation tank (KT) and the tank (AT) of broodstock, and a supplementary water tank (PV) connected to the tank (AT) of broodstock. The hatchery further comprises water disinfection units located in the piping system (Cs), means for determining water quality and a control unit (ESZ) for controlling the operation of the hatchery. The components of the hatchery are arranged in a transportable container (K). The biological filter unit (BSZ) is a moving bed filter unit with active surface biomedia to which an air blower unit (LF) supplying oxygen to the biomedia is connected.

## Description

The present invention relates to a mobile fish hatchery.

The basis of modern aquaculture production is the safe production of juvenile age fish groups. The basic facility for this is the hatchery, in which the mother animals stay for a few days and the fish larvae for 3 to 7 days after breeding. The hatchery may be a centralized, large-scale offspring structure that covers the offspring needs of a given geographical area. Such a solution is described, for example, in the study of I. Tölg, entitled "Ten Years of TEHAG Fishing" (1980, Vol. 26, pp. 48-49). The disadvantage of this solution is that it favors only a few fish species, typically selected according to efficient fish meat production, thus reducing the genetic variability of the fish stock in the area. Furthermore, this type of hatchery is stationary and therefore it is difficult to transport the broodstock to induced spawning. To eliminate these problems, one possible way is to use a mobile fish hatchery, which can be located in the natural habitat of a particular fish population to be rescued.

The disadvantages of the mobile fish hatcheries described in the art and available on the market are that they are difficult to transport due to their size, their operating energy requirements are high, and their assembly and installation are complicated.

It is an object of the present invention to provide a mobile fish hatchery which is easy to transport and to operate, and which is suitable for cost-effective fish farming in a safe aquatic environment.

The above objects are achieved by providing a mobile fish hatchery that comprises:
- a tank for holding the broodstock,
- a mechanical filter unit connected to the tank holding the broodstock,
- an equalisation tank connected to the tank of broodstock through a piping system
- a circulating pump and a biological water filter unit inserted in the piping system between the tank of broodtock and the equalisation tank,
- the water pipe connecting the equalisation tank and the tank of broodstock,
- tanks for growing larvae, significantly smaller than the tank of broodstock, said tanks being inserted between the equalisation tank and the tank of broodstock, and
- a supplementary water tank connected to the tank of broodstock.

The hatchery also includes water disinfection units located in the piping system, means for determining water quality, and a unit for controlling the operation of the overall hatchery. The components of the hatchery are housed in a transportable container. The biological filter unit is a moving bed filter unit with active surface biomedia to which an air blower unit is connected for supplying oxygen to the biomedia.

Preferred embodiments of the hatchery according to the invention are defined in the dependent claims.

The invention will now be described in more detail with reference to the accompanying drawings, in which:
- Figure 1 schematically shows the arrangement of the units of a mobile fish hatchery according to the invention; and
- Figure 2 is a circuit diagram and schematic diagram of the operation of the units of the mobile fish hatchery according to the invention.

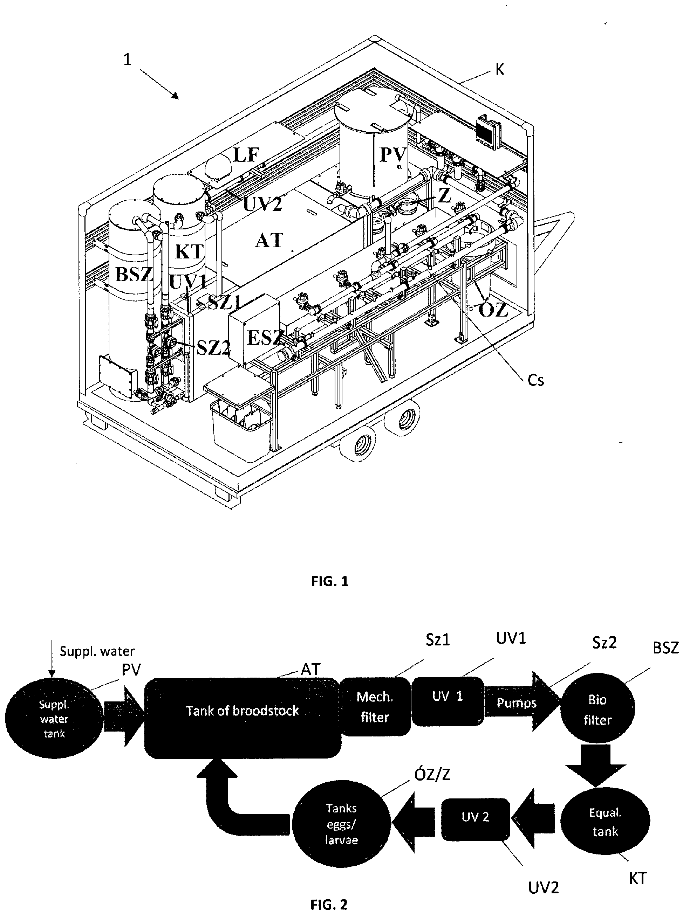

The units of the mobile fish hatchery 1 according to the invention and their arrangement are schematically illustrated in Figure 1. The hatchery 1 comprises a tank AT for holding a broodstock, and typically has a volume of 1000 liters. A mechanical filter unit Sz1 is attached to the tank AT holding the broodstock, the filter unit Sz1 preferably comprising three interchangeable layers R1, R2, R3 of different fineness with a cell size of 100-2200 µm and with a density of 20-25 kg/m³ and a pore size of 10, 20 and 30 ppi, respectively. The layers R1, R2, R3 are typically 500 mm long, 250 mm wide and 50 mm thick.

An equalisation tank KT of typically 200 liters in volume is connected to the tank AT of broodstock via a piping system Cs. A circulating pump unit Sz2, such as two circulation pumps of the type Grundfoss Alpha 1 25-40, is installed in the piping system between the tank AT of broodstock and the equalisation tank KT for circulating the water in the hatchery.

The piping system Cs between the tank AT of broodstock and the equalisation tank KT further includes a moving bed biological filter unit BSZ with an active surface biomedia for providing adequate water quality of the mobile fish hatchery 1 through its bacterial flora carrying out the filtration. In a preferred embodiment of the hatchery 1 according to the invention, the biological filter unit BSZ having a volume of typically 200 liters contains a biomedia with a volume of 100 liters and a specific active surface of 650 m²/m³. An air blowing unit LF supplying oxygen to the biomedia is connected to the biological filter unit BSZ. The air blowing unit LF typically provides a volume flow rate of 1.5 m³/h at a pressure of 300 mbar.

In the water pipe connecting the equalisation tank KT to the tank AT of broodstock, one or more tanks OZ for growing larvae, having a volume less than the tank AT of broodstock, preferably 100 liters, and one or more tanks Z for egg incubation with a filtering surface having a mesh size of 100-400 µm are installed. The hatchery 1 preferably comprises five tanks OZ of 100 liters each, or five egg incubation tanks Z of 10 liters each.

In the piping system Cs of the hatchery 1, there are water disinfection units UV1 and UV2 arranged, which are preferably UV lamps or inline disinfection units. In a preferred embodiment of the hatchery 1, two 11W UV lamps serve as a disinfection unit UV1 between the mechanical filter unit Sz1 and the biological filter unit BSZ, while between the equalisation tank KT and the tanks OZ, a disinfection unit UV2 of the inline type, preferably with a power of 25 W, is arranged for emitting UV light. The wavelength of the light emitted by the disinfection units UV1, UV2 is typically 254 nm.

The tank AT of broodstock is also connected to a supplementary water tank PV which stores the water used to fill the system and can be conveniently connected to the water mains. Preferably, the supplementary water tank PV is also provided with disinfection units and a heating device. The heating device is typically a heating insert with a power of 500 W.

The hatchery 1 may comprise means for determining the quality of the water circulating in the system, such as the concentration of ammonia, ammonium, nitrite, nitrate, oxygen, phenol, free chlorine, as well as chemical oxygen demand (COD), biochemical oxygen demand (BOD), pH, and may further comprise instruments for measuring water temperature.

As shown in Figure 2, in a preferred embodiment of the hatchery 1, the tanks OZ for growing larvae can be placed in a further branch from the equalisation tank KT to the tank AT of broodstock. The tanks OZ for growing larvae may be replaced with eggs incubation tanks Z for hatching eggs. Typically, five egg incubation tanks Z of 10 liters each are included in the hatchery.

The hatchery 1 according to the invention is operated by a control unit ESZ which provides protection against contact and overload. The hatchery 1 typically requires 230 V AC at 50 Hz and a maximum current of 8.7 A.

The components of the hatchery 1 are housed in a transportable container K. The container K is preferably carried by a transport assembly, such as a trailer, which has four abutment points with load distribution elements. The container K is preferably provided with a six-point abutment and may be removed from the transport assembly.

The weight of the mobile fish hatchery 1 filled with water is approx. 2500 kg when using the afore-mentioned components.

The operation of the mobile fish hatchery according to the invention will now be described with reference to Figures 1 and 2.

As a first step, the mobile fish hatchery 1 is placed in a field close to the desired location, such as the natural habitat of fish larvae, taking into account the nearly horizontal position of the transportable container K with a slope of less than 0.5%.

The mobile fish hatchery 1 is then iteratively filled with water. The supplementary water is introduced into the supplementary water tank PV. The water added to the system may be water from the place of origin of the broodstock. In this case, the water in the supplementary water tank PV is sterilized by the disinfection units placed therein and the water temperature is tempered to the desired value by the tempering means. Living water, well water or tap water may equally be used to fill the system. According to the origin of the water, the quality of the water filled into the supplementary water tank PV is checked by means of means for determining the quality of the water. When using living water, it is preferred to measure the nitrogen content and chemical oxygen demand (COD) and biochemical oxygen demand (BOD) of the water. When using drinking water, it is especially recommended to measure the free chlorine content of the water, while when using well water, it is recommended to measure the pH value, the inorganic nitrogen and the phenol content of the water. In this case, sterilization of the water filled into the supplementary water tank PV is not necessary.

The water filled in the supplementary water tank PV is transferred to the tank AT of broodstock. Filling of the supplementary water tank PV is repeated until the level of water passing through the tank AT of broodstock reaches the level of the overflow valve of the tank AT of broodstock. At this time, the pump Sz2 is started, the valve of the tank AT of broodstock opening into the equalisation tank KT is opened, and the biological water filter unit BSZ is filled up.

The filling of the biological water filter unit BSZ having volume of typically 200 liters is performed intermittently, typically 20 liters of biomedia batches are filled into the biological water filter unit BSZ. After loading the first dose, the blower unit LF is started. When the previous dose is no longer floating on the surface of the filter, the next dose of biomedia is loaded (the total amount the medium is 100 liters).

After filling up the biological water filter unit BSZ, the pump Sz2 is stopped and the tank AT holding the broodstock is refilled to the level of its overflow valve. The pump Sz2 is restarted and the equalisation tank KT is filled up, through the piping system CS, with the water stored in the tank AT of broodstock. The tank AT of broodstock is then refilled through the supplementary water tank PV.

The tanks OZ for growing larvae (or the egg incubation tanks Z) are then interposed into the water pipeline extending from the equalisation tank KT to the tank AT holding the broodstock with clamps and coupling elements.

In the mobile fish hatchery 1 filled up in this way, a pressure test and an operation test run are performed. The water in the hatchery circulates from the tank AT holding the broodstock towards the equalisation tank KT. In the final step before starting the operation, the filter bacterial flora of the filled-up biological water filter unit BSZ is produced, typically with the addition of inorganic nitrogen compounds, in particular ammonium chloride, or a starter culture from a recirculation system.

During the operation of the mobile fish hatchery 1, it is necessary to check the quality of the water circulating in the units of the hatchery. The amount of oxygen and the total amount of inorganic nitrogen compounds, i.e. free ammonia and ammonium, nitrite and nitrate contents, as well as the pH value and the temperature of the water in the biological filter unit BSZ are measured in the tanks AT of broodstock, the tanks OZ for growing larvae and the egg incubation tanks Z. For the safe hatching, the following water quality limits are recommended: the oxygen content of the water should preferably be at least 5 mg/l, the total ammonia and ammonium content of the water should not exceed 1 mg/l, and the free ammonia content should not exceed 0.1 mg/l, with the nitrate content not exceeding 20 mg/l, the nitrite content not exceeding 0,1 mg/l and the pH value ranging from 7 to 8.1. Based on the values characterizing the water quality, the daily volume of water to be replaced is determined, which is typically 10% of the total volume of the water circulating in the system, i.e. 150-190 liters/day. In the event that the nitrate value exceeds the recommended limit, the volume of water exchanged must be increased. If the ammonium and nitrite content of the water is higher than the limit value, the operation of the mechanical filter unit Sz1 and the biological water filter unit BSZ must be checked. Incubation with feed increases the total inorganic nitrogen content of the water. The total weight of fish that can be incubated in the mobile fish hatchery 1 shown in the example above is typically 20 kg and the recommended weight of dry eggs is 1 kg, and the capacity of the biological and mechanical filter units is typically 100-110 g with a maximum feed of 50-55% protein.

The advantage of the mobile fish hatchery according to the invention is that it can be easily transported to a fish hatchery site in an assembled state due to its simple and compact design. The tanks required for different types of hatching can be used during the fish hatching process as required. A further advantageous feature of the invention is that it allows the safe use of the water available at the hatchery site. Due to its compact size and low energy consumption, the mobile fish hatchery of the present invention can be operated at low cost to meet the need for periodic offspring.

## Claims

1. A mobile fish hatchery (1), **characterized in that** it comprises
- a tank (AT) holding of broodstock,
- a mechanical filter unit (Sz1) connected to the tank (AT) holding the broodstock,
- an equalisation tank (KT) connected to the tank (AT) of broodstock via a piping system (Cs),
- a circulating pump (Sz2) and a biological water filter unit (BSZ) inserted in the piping system (Cs) between the tank (AT) holding the broodstock and the equalisation tank (KT),
- a water supply line between the equalisation tank (KT) and the tank (AT) of broodstock,
- tanks (OZ) for growing larvae, significantly smaller than the tank (AT) of broodstock, said tanks (OZ) being inserted between the equalisation tank (PV) and the tank (AT) of broodstock, and
- a supplementary water tank (PV) connected to the tank (AT) of broodstock,
- wherein the hatchery further comprises water disinfection units located in the piping system (Cs), means for determining water quality and a control unit (ESZ) for controlling the operation of the hatchery,
- wherein the components of the hatchery are arranged in a transportable container (K), and
- wherein the biological filter unit (BSZ) is a moving bed filter unit with active surface biomedia to which an air blower unit (LF) supplying oxygen to the biomedia is connected.

2. The hatchery according to claim 1, **characterized in that** the volume of the tank (AT) holding the broodstock is 1000 liters and the volume of the tanks (ÓZ) for growing larvae is 100 liters.

3. The mobile fish hatchery according to claim 1 or 2, **characterized in that** the mechanical filter unit (Sz1) comprises three layers of interchangeable layers of foam, each layer having different fineness, having a cell size of 100-2200 µm and having a density of 20-25 kg/m³, wherein the pore fineness of the three layers is 10 ppi, 20 ppi and 30 ppi, respectively.

4. The mobile fish hatchery according to any one of claims 1 to 3, **characterized in that** the supplementary water tank (PV) is provided with disinfection units and a tempering device.

5. The mobile fish hatchery according to any one of claims 1 to 4, **characterized in that** the tanks (OZ) for growing larvae have a filter surface with a mesh size of 100-400 µm.

6. The mobile fish hatchery according to any one of claims 1 to 5, **characterized in that** in a further branch from the equalisation tank (KT) to the tank (AT) of broodstock, there are egg incubation tanks (Z) having a volume of 10 liters interposed in parallel to the tanks (OZ) for growing larvae.

7. The mobile fish hatchery according to any one of claims 1 to 6, **characterized in that** the disinfection units (UV1, UV2) are UV lamps.
